# FASCICULE DE BREVET EUROPEEN

(11) **EP 3 932 734 B1**
(45) Date de publication et mention de la délivrance du brevet: **21.06.2023**
(21) Numéro de dépôt: 21183399.1
(22) Date de dépôt: 02.07.2021
(51) Int. Cl.: B60N 2/815, B60N 2/818, B60N 2/894

(54) **APPUI-TÊTE DE SIÈGE DE VÉHICULE AUTOMOBILE**
KOPFSTÜTZE FÜR KRAFTFAHRZEUGSITZ
HEADREST FOR A MOTOR VEHICLE SEAT

(30) Priorité: 02.07.2020 FR 2007026
(43) Date de publication de la demande: 05.01.2022
(73) Titulaire: TESCA France, 92977 Paris La Défense Cedex (FR)
(72) Inventeur: GEORGES, Laurent, 92977 Paris La Défense Cedex (FR); LEFEVRE, Steve, 92977 Paris La Défense Cedex (FR)
(74) Mandataire: Sayettat, Julien Christian

(56) Documents cités:
- EP-A1- 3 357 749
- WO-A1-2018/015691
- FR-A1- 3 063 689

## Description

L'invention concerne un appui-tête de siège de véhicule automobile.

Il est connu dans le document FR-A-3 063 689 de réaliser un appui-tête de siège de véhicule automobile, ledit appui-tête comprenant :
- une armature présentant une première et une deuxième tiges métalliques parallèles reliées entre elles par une entretoise de manière à présenter en vue longitudinale une forme générale de U renversé, lesdites tiges étant destinées à être montées en haut de dossier dudit siège,
- un boitier en matériau plastique moulé d'absorption d'énergie en cas de choc de la tête d'un passager, ledit boitier présentant un premier et un deuxième conduits, issus de moulage, de réception respective desdites première et deuxième tiges en coulissement, de manière à permettre un réglage en hauteur dudit boitier, chacun desdits conduits étant pourvu d'un palier haut et d'un palier bas exerçant tous deux selon une direction longitudinale un contact serrant sur chacune desdites tiges.

On précise ici que contact serrant exercé longitudinalement par les paliers sur les tiges permet de limiter les bruits de vibrations, et aussi le risque d'arc-boutement pouvant nuire au bon coulissement du boitier sur lesdites tiges lorsque l'on opère son réglage en hauteur.

Dans les réalisations connues, le matériau plastique utilisé pour réaliser le boitier est généralement d'un faible coût et présente, notamment de par sa nature de polyoléfine, une forte propension aux variations dimensionnelles en fonction de la température.

L'écart entre les tiges étant peu sensible aux variations de température, il est usuellement prévu que les paliers soient des pièces spécifiques montées dans le boitier de manière à pouvoir débattre transversalement, afin de pouvoir absorber les variations dimensionnelles transversales du boitier.

Il en résulte une complexification de l'appui-tête et un surcoût de fabrication.

L'invention a pour but de proposer un agencement simplifié permettant de préserver un bon coulissement du boitier malgré les variations dimensionnelles transversales qu'il peut enregistrer avec les écarts de température.

A cet effet, l'invention propose un appui-tête de siège de véhicule automobile, ledit appui-tête comprenant :
- une armature présentant une première et une deuxième tiges métalliques parallèles reliées entre elles par une entretoise de manière à présenter en vue longitudinale une forme générale de U renversé, lesdites tiges étant destinées à être montées en haut de dossier dudit siège,
- un boitier en matériau plastique moulé d'absorption d'énergie en cas de choc de la tête d'un passager, ledit boitier présentant un premier et un deuxième conduits, issus de moulage, de réception respective desdites première et deuxième tiges en coulissement, de manière à permettre un réglage en hauteur dudit boitier, chacun desdits conduits étant pourvu d'un palier haut et d'un palier bas exerçant tous deux selon une direction longitudinale un contact serrant sur chacune desdites tiges,
ledit appui-tête présentant en outre les caractéristiques suivantes :
- lesdits paliers sont moulés d'un bloc avec lesdits conduits et présentent en leur périphérie deux pattes flexibles opposées selon ladite direction longitudinale,
- chacun desdits paliers est pourvu d'un ressort de rappel desdites pattes correspondantes vers lesdites tiges, ledit ressort présentant une forme générale de U ou de C dont chacune des branches vient en appui sur chacune desdites pattes de manière à réaliser un pincement desdites tiges entre lesdites pattes pour définir l'effort de coulissement,
- ledit premier conduit présente un ou plusieurs goulots d'étranglement s'étendant sur une distance axiale cumulée minimale de 50 mm et présentant une dimension transversale ajustée à celle de ladite première tige, de manière à minimiser le débattement transversal entre ladite tige et ledit conduit,
- ledit deuxième conduit est dimensionné de manière à assurer un jeu transversal global d'au moins 2 mm entre ledit conduit et ladite deuxième tige, de manière à éviter, suite à des variations dimensionnelles dudit boitier résultant de variations de température, une interférence entre les deux.

Dans cette description, les termes de positionnement dans l'espace (haut, bas, longitudinal, transversal, vertical, horizontal, latéral, ...) sont pris en référence à un appui-tête monté dans le véhicule.

Les termes « axial », « axialement », « diamétralement » sont considérés relativement à la direction générale d'extension d'une tige.

La distance axiale cumulée correspond, dans le cas d'une pluralité de goulots, à la somme des distances axiales de chacun des goulots.

Quand un seul goulot est prévu, la distance axiale cumulée correspond à la dimension axiale dudit goulot.

On précise ici que, dans toute la description, un « jeu transversal global » correspond à la somme des jeux existant de part et d'autre de la tige concernée.

Avec l'agencement proposé, on centre le guidage transversal du boitier uniquement sur la première tige, et ceci sur une longueur suffisante pour optimiser ledit guidage, et ceci sans avoir à prévoir des paliers formés par des pièces ajoutées ce qui simplifie la réalisation de l'appui-tête.

Quant à la deuxième tige, elle reste totalement libre de débattre transversalement, ce qui permet de ne pas entraver le coulissement du boitier du fait des variations dimensionnelles qui peuvent se produire.

D'autres particularités et avantages de l'invention apparaîtront dans la description qui suit, faite en référence aux figures jointes, dans lesquelles :

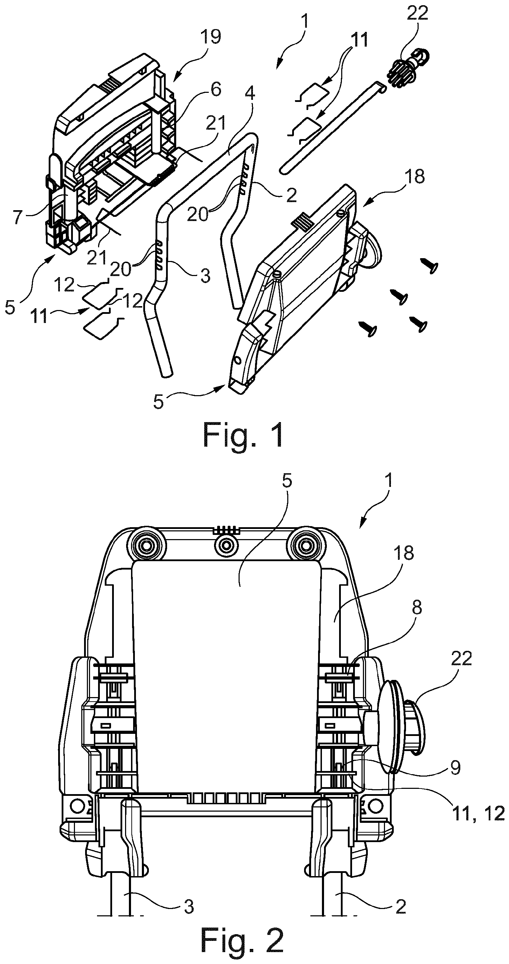

[Fig.1] est une vue schématique en perspective partielle éclatée d'un appui-tête selon une réalisation,
[Fig.2] est une vue schématique longitudinale non éclatée de la réalisation de la figure 1,

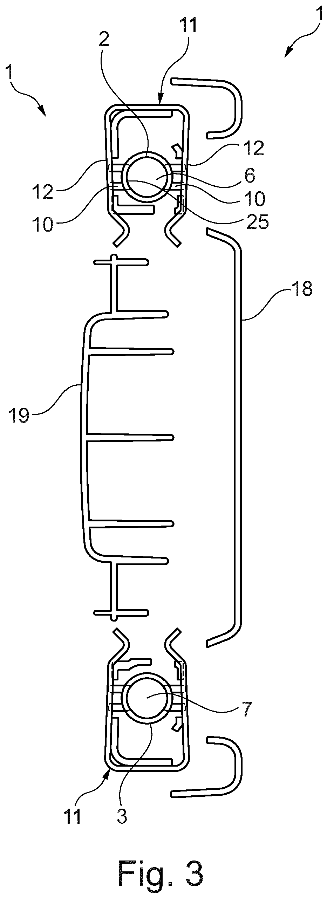

[Fig.3] est une vue schématique en coupe horizontale de la réalisation des figures précédentes,

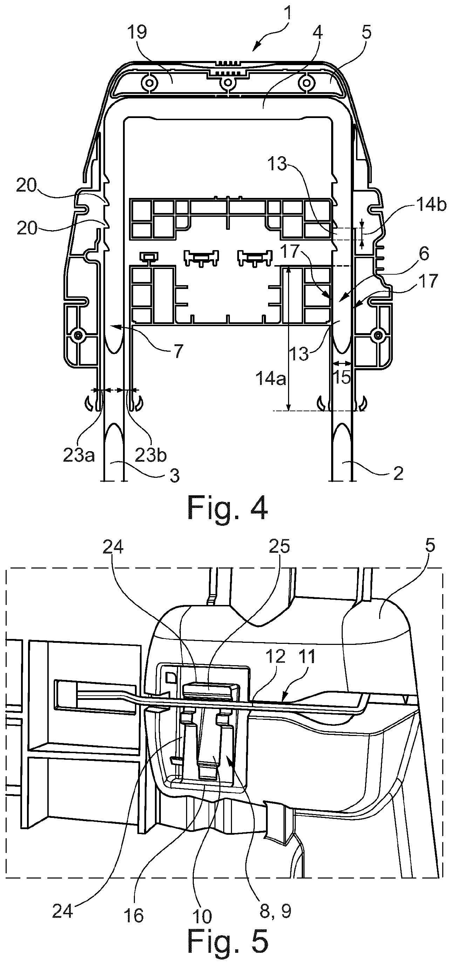

[Fig.4] est une vue schématique en coupe transversale verticale de la réalisation des figures précédentes,
[Fig.5] est une vue schématique en perspective de détail de la réalisation des figures précédentes.

En référence aux figures, on décrit un appui-tête 1 de siège de véhicule automobile, ledit appui-tête comprenant :
- une armature - ici tubulaire - présentant une première 2 et une deuxième 3 tiges métalliques parallèles reliées entre elles par une entretoise 4 de manière à présenter en vue longitudinale une forme générale de U renversé, lesdites tiges étant destinées à être montées en haut de dossier dudit siège,
- un boitier 5 en matériau plastique moulé d'absorption d'énergie en cas de choc de la tête d'un passager, ledit boitier présentant un premier 6 et un deuxième 7 conduits, issus de moulage, de réception respective desdites première et deuxième tiges en coulissement, de manière à permettre un réglage en hauteur dudit boitier, chacun desdits conduits étant pourvu d'un palier haut 8 et d'un palier bas 9 exerçant tous deux selon une direction longitudinale un contact serrant sur chacune desdites tiges,
ledit appui-tête présentant en outre les caractéristiques suivantes :
- lesdits paliers sont moulés d'un bloc avec lesdits conduits et présentent en leur périphérie deux pattes 10 flexibles opposées selon ladite direction longitudinale,
- chacun desdits paliers est pourvu d'un ressort 11 de rappel desdites pattes correspondantes vers lesdites tiges, ledit ressort présentant une forme générale de U ou de C dont chacune des branches 12 vient en appui sur chacune desdites pattes de manière à réaliser un pincement desdites tiges entre lesdites pattes pour définir l'effort de coulissement,
- ledit premier conduit présente un ou plusieurs - selon la réalisation représentée - goulots 13 d'étranglement s'étendant sur une distance axiale cumulée (correspondant ici aux distances 14a et 14b cumulées) minimale de 50 mm et présentant une dimension transversale 15 ajustée à celle de ladite première tige, de manière à minimiser le débattement transversal entre ladite tige et ledit conduit,
- ledit deuxième conduit est dimensionné de manière à assurer un jeu transversal global 23a,23b d'au moins 2 mm entre ledit conduit et ladite deuxième tige, de manière à éviter, suite à des variations dimensionnelles dudit boitier résultant de variations de température, une interférence entre les deux.

De façon non représenté, le boitier 5 est garni d'un coussin.

Selon la réalisation représentée, l'armature est à base d'un tube métallique replié.

Selon une réalisation non représentée, l'entretoise 4 est une pièce indépendante, notamment métallique, fixée sur les tiges 2,3, par exemple par emboitement.

Selon une réalisation, à température ambiante, un jeu 23a,23b similaire - donc de l'ordre de 1 mm ou plus - est choisi de chaque côté de la deuxième tige 3 pour définir le jeu transversal global.

Selon une réalisation, un goulot 13 présente avec la première tige 2 un jeu transversal global résiduel (non repéré sur les figures car d'amplitude trop faible) compris entre 0,1 et 0,5 mm, ce qui permet un contact ajusté entre ladite tige et le premier conduit 6.

Selon une réalisation, à température ambiante, un jeu similaire - de l'ordre de 0,05 mm ou plus - est choisi de chaque côté de la première tige 2 pour définir le jeu transversal global résiduel.

Selon la réalisation représentée, les pattes 10 sont reliées au reste du boitier 5 par une première extrémité 16 de manière à définir dans ledit boitier une fente 24 en forme générale de U permettant la flexion desdites pattes vers l'intérieur pour qu'elles s'appuient selon leur deuxième extrémité 25 sur la tige 2,3 correspondante.

En variante non représentée, on pourrait envisager un rattachement des pattes 10 au reste du boitier 5 aussi par leur deuxième extrémité 25.

Selon la réalisation représentée, un goulot 13 est défini par deux nervures 17 diamétralement opposées s'étendant axialement.

Selon une réalisation, le matériau plastique constitutif du boitier 5 présente une dureté inférieure à 50 Shore.

Selon une réalisation, le matériau plastique constitutif du boitier 5 est à base de polyoléfine - par exemple du polyéthylène haute densité (PEHD) - non chargée.

Selon la réalisation représentée, le boitier 5 est formé par une coque avant 18 et une coque arrière 19 se refermant sur elles-mêmes.

Selon la réalisation représentée, les conduits 6,7 sont issus de moulage de la coque arrière 19.

Selon la réalisation représentée, l'appui-tête 1 comprend en outre un dispositif de verrouillage du boitier par rapport aux tiges 2,3 selon une pluralité de positions verticales, de manière à verrouiller le réglage en hauteur choisi pour ledit boitier, ledit dispositif comprenant :
- au moins une tige 2,3 crantée pourvue de crans 20 de réglage s'étageant axialement,
- au moins une saillie 21 de verrouillage - ici disposée sur un fil de métal à ressort - montée mobile par rapport audit boitier entre une position de verrouillage, où ladite saillie s'insère dans un desdits crans, et une position de déverrouillage, où ladite saillie se retire dudit cran afin de libérer le coulissement de ladite tige crantée,
- un bouton 22 d'actionnement de ladite saillie vers sa position de déverrouillage, ledit bouton étant rappelé vers sa position inactive par un moyen ressort non représenté.

Selon la réalisation représentée, le bouton 22 est positionné latéralement du côté du premier conduit 6, de manière à permettre un actionnement simultané par une seule main dudit bouton et du coulissement du boitier 5, en minimisant les risques de blocage par arc-boutement du fait de la proximité entre ladite main et ledit premier conduit.

## Revendications

1. Appui-tête (1) de siège de véhicule automobile, ledit appui-tête comprenant :
• une armature présentant une première (2) et une deuxième (3) tiges métalliques parallèles reliées entre elles par une entretoise (4) de manière à présenter en vue longitudinale une forme générale de U renversé, lesdites tiges étant destinées à être montées en haut de dossier dudit siège,
• un boitier (5) en matériau plastique moulé d'absorption d'énergie en cas de choc de la tête d'un passager, ledit boitier présentant un premier (6) et un deuxième (7) conduits, issus de moulage, de réception respective desdites première et deuxième tiges en coulissement, de manière à permettre un réglage en hauteur dudit boitier, chacun desdits conduits étant pourvu d'un palier haut (8) et d'un palier bas (9) exerçant tous deux selon une direction longitudinale un contact serrant sur chacune desdites tiges,
ledit appui-tête étant **caractérisé en ce que** :
• lesdits paliers sont moulés d'un bloc avec lesdits conduits et présentent en leur périphérie deux pattes (10) flexibles opposées selon ladite direction longitudinale,
• chacun desdits paliers est pourvu d'un ressort (11) de rappel desdites pattes correspondantes vers lesdites tiges, ledit ressort présentant une forme générale de U ou de C dont chacune des branches (12) vient en appui sur chacune desdites pattes de manière à réaliser un pincement desdites tiges entre lesdites pattes pour définir l'effort de coulissement,
• ledit premier conduit présente un ou plusieurs goulots (13) d'étranglement s'étendant sur une distance axiale cumulée (14a, 14b) minimale de 50 mm et présentant une dimension transversale (15) ajustée à celle de ladite première tige, de manière à minimiser le débattement transversal entre ladite tige et ledit conduit,
• ledit deuxième conduit est dimensionné de manière à assurer un jeu transversal global (23a,23b) d'au moins 2 mm entre ledit conduit et ladite deuxième tige, de manière à éviter, suite à des variations dimensionnelles dudit boitier résultant de variations de température, une interférence entre les deux.

2. Appui-tête selon la revendication 1, **caractérisé en ce qu'**un goulot (13) présente avec la première tige (2) un jeu transversal global résiduel compris entre 0,1 et 0,5 mm.

3. Appui-tête selon l'une des revendications 1 ou 2, **caractérisé en ce que** les pattes (10) sont reliées au reste du boitier (5) par une première extrémité (16) de manière à définir dans ledit boitier une fente (24) en forme générale de U permettant la flexion desdites pattes vers l'intérieur pour qu'elles s'appuient selon leur deuxième extrémité (25) sur la tige (2,3) correspondante.

4. Appui-tête selon l'une quelconque des revendications précédentes, **caractérisé en ce qu'**un goulot (13) est défini par deux nervures (17) diamétralement opposées s'étendant axialement.

5. Appui-tête selon l'une quelconque des revendications précédentes, **caractérisé en ce que** le matériau plastique constitutif du boitier (5) présente une dureté inférieure à 50 Shore.

6. Appui-tête selon l'une quelconque des revendications précédentes, **caractérisé en ce que** le matériau plastique constitutif du boitier (5) est à base de polyoléfine non chargée.

7. Appui-tête selon l'une quelconque des revendications précédentes, **caractérisé en ce que** le boitier (5) est formé par une coque avant (18) et une coque arrière (19) se refermant sur elles-mêmes.

8. Appui-tête selon la revendication précédente, **caractérisé en ce que** les conduits (6,7) sont issus de moulage de la coque arrière (19).

9. Appui-tête selon l'une quelconque des revendications précédentes, **caractérisé en ce qu'**il comprend en outre un dispositif de verrouillage du boitier (5) par rapport aux tiges (2,3) selon une pluralité de positions verticales, de manière à verrouiller le réglage en hauteur choisi pour ledit boitier, ledit dispositif comprenant :
• au moins une tige (2,3) crantée pourvue de crans (20) de réglage s'étageant axialement,
• au moins une saillie (21) de verrouillage montée mobile par rapport audit boitier entre une position de verrouillage, où ladite saillie s'insère dans un desdits crans, et une position de déverrouillage, où ladite saillie se retire dudit cran afin de libérer le coulissement de ladite tige crantée,
• un bouton (22) d'actionnement de ladite saillie vers sa position de déverrouillage, ledit bouton étant rappelé vers sa position inactive par un moyen ressort.

10. Appui-tête selon la revendication précédente, **caractérisé en ce que** le bouton (22) est positionné latéralement du côté du premier conduit (6).

## Patentansprüche

1. Kopfstütze (1) für Kraftfahrzeugsitz, wobei die Kopfstütze umfasst:
• eine Armatur, die einen ersten (2) und einen zweiten (3) parallelen Metallstab aufweist, die durch ein Distanzstück (4) derart miteinander verbunden sind, um in einer Längsansicht eine allgemeine Form eines umgekehrten U aufzuweisen, wobei die Stäbe dazu bestimmt sind, oben an der Rückenlehne des Sitzes montiert zu werden,
• ein aus Kunststoffmaterial geformtes Gehäuse (5) zur Energieabsorption im Falle eines Aufpralls des Kopfes eines Insassen, wobei das Gehäuse einen ersten (6) und einen zweiten (7) Kanal, aus der Formung stammend, zur jeweiligen gleitenden Aufnahme des ersten und zweiten Stabes aufweist, um eine Höheneinstellung des Gehäuses zu ermöglichen, wobei jeder der Kanäle mit einem oberen Lager (8) und einem unteren Lager (9) versehen ist, welche beide in einer Längsrichtung einen Anpresskontakt auf jeden der Stäbe ausübt,
wobei die Kopfstütze **dadurch gekennzeichnet ist, dass**:
• die Lager in einem Block mit den Kanälen geformt sind, und an ihrem Umfang zwei, in der Längsrichtung gegenüberliegende flexible Laschen (10) aufweisen,
• jedes der Lager mit einer Feder (11) zum Rückstellen der entsprechenden Laschen zu den Stäben versehen ist, wobei die Feder eine allgemeine Form eines U oder eines C aufweist, von denen jeder der Schenkel (12) an jeder der Laschen anliegt, um eine Klemmung der Stäbe zwischen den Laschen auszuüben, um die Gleitkraft zu definieren,
• der erste Kanal eine oder mehrere Engstellen (13) zum Einschnüren aufweist, die sich über eine kumulierte axiale Mindestentfernung (14a, 14b) von 50 mm erstrecken und eine Querabmessung (15) aufweisen, die jener des ersten Stabes angepasst ist, um den Querausschlag zwischen dem Stab und dem Kanal zu minimieren,
• der zweite Kanal derart bemessen ist, um für ein globales Querspiel (23a, 23b) von mindestens 2 mm zwischen dem Kanal und dem zweiten Stab zu sorgen, um infolge von Abmessungsvariationen des Gehäuses, die auf Temperaturvariationen zurückzuführen sind, eine Überlagerung zwischen den beiden zu vermeiden.

2. Kopfstütze nach Anspruch 1, **dadurch gekennzeichnet, dass** eine Engstelle (13) mit dem ersten Stab (2) ein globales restliches Querspiel aufweist, das zwischen 0,1 und 0,5 mm liegt.

3. Kopfstütze nach einem der Ansprüche 1 oder 2, **dadurch gekennzeichnet, dass** die Laschen (10) durch ein erstes Ende (16) derart mit dem Rest des Gehäuses (5) verbunden sind, um in dem Gehäuse einen Spalt (24) in einer allgemeinen Form eines U zu definieren, welcher die Biegung der Laschen nach innen ermöglicht, damit sie sich entlang ihres zweiten Endes (25) an dem entsprechenden Stab (2, 3) anlegen.

4. Kopfstütze nach einem der vorstehenden Ansprüche, **dadurch gekennzeichnet, dass** eine Engstelle (13) durch zwei diametral gegenüberliegende, sich axial erstreckende Rippen (17) definiert wird.

5. Kopfstütze nach einem der vorstehenden Ansprüche, **dadurch gekennzeichnet, dass** das Kunststoffmaterial, aus dem das Gehäuse (5) besteht, eine Härte von weniger als 50 Shore aufweist.

6. Kopfstütze nach einem der vorstehenden Ansprüche, **dadurch gekennzeichnet, dass** das Kunststoffmaterial, aus dem das Gehäuse (5) besteht, auf Grundlage von ungefülltem Polyolefin ist.

7. Kopfstütze nach einem der vorstehenden Ansprüche, **dadurch gekennzeichnet, dass** das Gehäuse (5) aus einer vorderen Schale (18) und einer hinteren Schale (19) gebildet ist, die sich in sich selbst verschließen.

8. Kopfstütze nach dem vorstehenden Anspruch, **dadurch gekennzeichnet, dass** die Kanäle (6, 7) aus der Formung der hinteren Schale (19) stammen.

9. Kopfstütze nach einem der vorstehenden Ansprüche, **dadurch gekennzeichnet, dass** sie weiter eine Verriegelungsvorrichtung des Gehäuses (5) in Bezug auf die Stäbe (2, 3) in einer Vielzahl von vertikalen Positionen umfasst, um die gewählte Höheneinstellung für das Gehäuse zu verriegeln, wobei die Vorrichtung umfasst:
• mindestens einen gerasteten Stab (2, 3), der mit Rasten (20) zum Einstellen versehen ist, die axial stufenförmig angeordnet sind,
• mindestens einen Verriegelungsvorsprung (21), der in Bezug auf das Gehäuse zwischen einer Verriegelungsposition, in der der Vorsprung in eine der Rasten eingreift, und einer Entriegelungsposition, in der der Vorsprung aus der Raste zurückgezogen ist, um das Gleiten des gerasteten Stabs freizugeben, beweglich montiert ist,
• einen Knopf (22) zum Betätigen des Vorsprungs in seine Entriegelungsposition, wobei der Knopf durch ein Federmittel in seine inaktive Position zurückgestellt wird.

10. Kopfstütze nach dem vorstehenden Anspruch, **dadurch gekennzeichnet, dass** der Knopf (22) seitlich auf Seiten des ersten Kanals (6) positioniert ist.

## Claims

1. A headrest (1) for a motor vehicle seat, said headrest comprising:
• an armature having first (2) and second (3) parallel metal rods which are connected to each other by a spacer (4) so as to have, in longitudinal view, the general shape of an inverted U, said rods being intended to be mounted at the top of the back of said seat,
• a housing (5) made of moulded plastic material for absorbing energy in the event of a passenger's head impact, said housing having first (6) and a second (7) conduits, resulting from moulding, for respective reception of said first and second sliding rods, so as to allow a height adjustment of said housing, each of said conduits being provided with an upper bearing (8) and a lower bearing (9) both exerting contact tightening on each of said rods in a longitudinal direction,
said headrest being **characterised in that**:
• said bearings are integrally moulded with said conduits and have, at the periphery thereof, two opposite flexible tabs (10) in said longitudinal direction,
• each of said bearings is provided with a spring (11) for returning said corresponding tabs to said rods, said spring having a general U or C shape, each of the branches (12) of which bears on each of said tabs so as to carry out a pinching of said rods between said tabs to define the sliding force,
• said first conduit has one or more bottlenecks (13) extending over a minimum cumulative axial distance (14a, 14b) of 50 mm and having a transverse dimension (15) adjusted to that of said first rod, so as to minimise the transverse movement between said rod and said conduit,
• said second conduit is dimensioned so as to ensure an overall transverse clearance (23a, 23b) of at least 2 mm between said conduit and said second rod, so as to avoid, following dimensional variations of said housing resulting from temperature variations, an interference between the two.

2. The headrest according to claim 1, **characterised in that** a neck (13) has, with the first rod (2), a residual overall transverse clearance comprised between 0.1 and 0.5 mm.

3. The headrest according to one of claims 1 or 2, **characterised in that** the lugs (10) are connected to the rest of the housing (5) by a first end (16) so as to define, in said housing, a generally U-shaped slot (24) allowing the bending of said tabs inwards so that they bear on the corresponding rod (2, 3) according to the second end (25) thereof.

4. The headrest according to any one of the preceding claims, **characterised in that** a neck (13) is defined by two axially extending diametrically opposite ribs (17).

5. The headrest according to any one of the preceding claims, **characterised in that** the plastic material constituting the housing (5) has a hardness of less than 50 Shore.

6. The headrest according to any one of the preceding claims, **characterised in that** the plastic material constituting the housing (5) is based on unfilled polyolefin.

7. The headrest according to any one of the preceding claims, **characterised in that** the housing (5) is formed by a front shell (18) and a rear shell (19) closing in on themselves.

8. The headrest according to the preceding claim, **characterised in that** the ducts (6, 7) are derived from moulding the rear shell (19).

9. The headrest according to any one of the preceding claims, **characterised in that** it further comprises a locking device of the housing (5) relative to the rods (2, 3) according to a plurality of vertical positions, so as to lock the height adjustment chosen for said housing, said device comprising:
• at least one notched rod (2, 3) provided with adjustment notches (20) being staggered axially,
• at least one locking protrusion (21) movably mounted relative to said housing between a locking position, where said protrusion is inserted into one of said notches, and an unlocking position, where said protrusion is removed from said notch in order to release the sliding of said notched rod,
• a button (22) for actuating said protrusion towards its unlocking position, said button being returned to its inactive position by spring means.

10. The headrest according to the preceding claim, **characterised in that** the button (22) is positioned laterally on the side of the first conduit (6).
